Europäisches Patentamt

European Patent Office

Office européen des brevets

(11) Publication number: **0 255 258**
**A2**

# EUROPEAN PATENT APPLICATION

(21) Application number: **87306218.6**

(22) Date of filing: **14.07.87**

(51) Int. Cl.⁴: **H02M 7/217 , H02M 3/157**

(30) Priority: **01.08.86 US 891911**

(43) Date of publication of application:
**03.02.88 Bulletin 88/05**

(84) Designated Contracting States:
**DE FR GB IT NL**

(71) Applicant: **UNISYS CORPORATION
Township Lane and Union Meetings Roads
Blue Bell Pennsylvania 19424(US)**

(72) Inventor: **Henze, Christopher P.
c/o Unisys Corporation Defense Systems
P.O. Box 64525 St. Paul MN 55164-0525(US)**

(74) Representative: **Orchard, Oliver John et al
JOHN ORCHARD & CO. Staple Inn Buildings
North High Holborn
London WC1V 7PZ(GB)**

(54) Digitally controlled A.C. to D.C. power conditioner that draws sinusoidal input current.

(57) An A.C. to D.C. power conditioner, which draws sinusoidal input current utilizes digital proportional-integral control to provide output voltage regulation by adjusting the gain of a current program loop. The current program loop controls the state of a power switch to force the instantaneous average current in an inductor to follow the instantaneous rectified line voltage. Variable hysteresis control provides noise immunity by increasing the ripple current in an iron-cored filter inductor when the instantaneous input voltage is high. Digital proportional-integral (PI) control provides output voltage regulation by adjusting, in discrete steps, the gain of the current program loop. A multiplying digital-to-analog converter serves as an interface between the voltage regulation loop and the current program loop. The sampling rate of the PI controller is determined by the input line frequency, which allows good transient response to be obtained. The current program loop forces the current drawn by the power conditioner to follow the input A.C. line voltage, thereby electronically emulating a resistor.

Fig. 1

# DIGITALLY CONTROLLED A.C. TO D.C. POWER CONDITIONER THAT DRAWS SINUSOIDAL INPUT CURRENT

## BACKGROUND OF THE INVENTION

Recently there has been an expanded interest in power conditioning equipment that draws sinusoidal input current from the A.C. line. This need is discussed in the articles by E. Kamm entitled "New Military EMI Specifications Affecting the Input Architecture of A.C. to D.C. Converters", Proceedings of Powercon 8, 1981, and by M.J. Kocher and R.L. Steigerwald entitled "An A.C. to D.C. Converter with High Quality Input Waveforms", IEEE PESC Conference Record, 1982. The present invention provides a digital implementation of a voltage feedback loop and a multiplying digital-to-analog converter in a current feedback loop to provide a power conditioner, which draws sinusoidal output current and provides a regulated direct current output voltage and is operable over a wide range of A.C. line frequencies.

## BRIEF DESCRIPTION OF THE DRAWINGS

The present invention is described by reference to the drawings in which:

Fig. 1 shows a block diagram of the digitally controlled power conditioner of the present invention.

Fig. 2 shows the control voltage waveforms of the current program loop during one half cycle of the A.C. line.

Fig. 3 - Shows a block diagram of a digital PI controller which determines the gain to be used by the current program loop during the next half cycle of the A.C. line from a digital error signal and the discrete integral of the digital error signal.

Fig. 4 - Shows the switching frequency and inductor ripple current versus $(V_{in}/V_{out})$ plots for various converter conditions, where

Fig. 4a is for constant current hysteresis control,

Fig. 4b is for constant switching frequency control,

Fig. 4c is for variable current hysteresis control, and

Fig. 4d is for constant off-time control.

## TECHNICAL DESCRIPTION OF THE INVENTION

Noise generated by high speed switching can upset the operation of a current program loop in A.C. to D.C. power converters. Variable hysteresis control is employed in the present invention so that the highest noise immunity is provided when the switching energy (and therefore, the noise generation) is the greatest. Variable hysteresis control is employed in the present invention to control the inductor ripple current $I_{rip}$ in proportion to the instantaneous rectified input voltage $V_{in}$, where:

$$I_{rip} = K_{hy}V_{in} \quad (1)$$

The power converter utilizes a step-up converter which has a switching frequency that is much higher than the A.C. line frequency. Steady-state operation may, therefore, be assumed in the step-up converter for any average instantaneous input voltage. Using Equation 1 and the approximations:

$$t_{on} = \frac{L_1 I_{rip}}{V_{in}} \qquad t_{off} = \frac{L_1 I_{rip}}{V_{out} - V_{in}} \qquad (2,3)$$

an expression for the switching frequency $f_{sw}$ may be found in terms of the current hysteresis coefficient $K_{hy}$, the step-up converter inductance $L_1$, and the input and output voltages

$$f_{sw} = \frac{V_{out} - V_{in}}{K_{hy}L_1 V_{out}} \qquad (4)$$

The maximum switching frequency, which occurs when the input voltage goes to zero, is bounded and is given by

$f_{sw,max} = (K_{hy}L_1)^{-1}$ (5)

In practice, the maximum switching frequency will not be obtained since a real step-up converter is unable to maintain an output voltage as the input voltage and duty ratio approach zero.

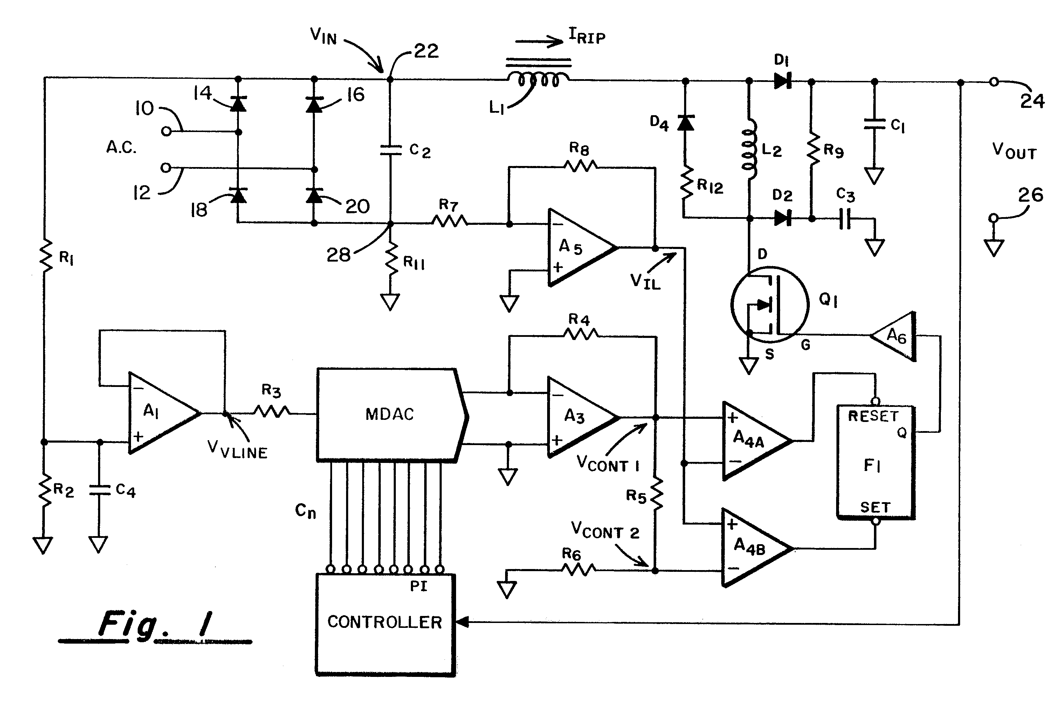

The circuit of Fig. 1 can be used to implement the variable hysteresis current program loop of the present invention. The A.C. input line voltage is connected across the lines 10, 12 to a full wave rectifying circuit consisting of the rectifiers 14, 16, 18 and 20. The rectified output which is labeled $V_{in}$ appears at the junction node 22 of a high-permeability core of soft iron, or other suitable material that has magnetic hysteresis characteristics and filter inductor $L_1$ which is coupled between the node 22 and the output terminal 24 and a capacitor $C_2$, which has a relatively small value compared to the filter capacitor $C_1$. $C_2$ is used to by pass the A.C. line so the ripple current in the inductance $L_1$ flows through $C_2$, and not back through the A.C. power system. The output voltage $V_{out}$ is developed across the output terminals 24, 26, the inductance $L_1$, the diode $D_1$, the capacitor $C_1$ and the transmission $Q_1$ form a step up or boost converter. The diodes $D_2$ and $D_4$, the capacitor $C_3$ and the resistors $R_9$ and $R_{12}$ form a snubber circuit for reducing switching transients on the power transistor $Q_1$.

A diode $D_3$ is in series with the resistor $R_{12}$. $R_{12}$ is coupled to the junction point of the inductor $L_2$ and the anode of the diode $D_2$ and the drain D of the field-effect power transistor $Q_1$. The source S of the field-effect transistor $Q_1$ is grounded. The gate G of the field-effect receives the output of the amplifier $A_6$. The amplifier $A_6$ supplies a logic "1" and a logic "0" to the transistor $Q_1$ so that it acts as a switch under control of the flip-flop $F_1$ to provide step-up conversion.

The node 22 is also coupled to a voltage dividing network consisting of the resistors $R_1$ and $R_2$. $R_2$ is coupled to a filtering capacitor $C_4$. The junction point of $R_2$ and $C_4$ is coupled to the non-inverting input terminal of operational amplifier $A_1$ which is connected so that its inverting input terminal is directly connected to its output so that the amplifier $A_1$ acts as a voltage follower. The output of the amplifier $A_1$ is coupled through the resistor $R_3$ to a multiplying digital-to-analog converter (MDAC). The MDAC is supplied a gain signal $c_n$ from the PI controller which has an input coupled to the output terminal 24. The revision $R_3$ is coupled to the MDAC controller and receives the voltage $V_{LINE}$ from the amplifier $A_1$. Under the control of the gain signal from the PI controller, the gain-controlled analog output signal of the MDAC is supplied to the inverting input terminal of the amplifier $A_3$. The amplifier $A_3$ also has a feedback resistor $R_4$ coupled between its output and its inverting input terminal. The output of the amplifier $A_3$ is coupled to the voltage dividing network consisting of the resistors $R_5$ and $R_6$ to the inverting input terinal, one side of a dual comparator $A_{4B}$. The other side of the inverting comparator $A_{4A}$ is coupled to receive the output from the amplifier $A_3$ on its non-inverting input terminal.

The lower end of the capacitor $C_2$ is coupled to a junction of the resistor $R_7$ and the resistor $R_{11}$, the other end of which is grounded. The signal obtained at the junction node 28 of these two resistors is coupled through the resistor $R_7$ to the inverting input terminal of an amplifier $A_5$. The amplifier $A_5$ has a feedback resistor from its output to its inverting input terminal. The output of the amplifier $A_5$ is connected to the inverting input terminal of the comparator $A_{4A}$ and also to the non-inverting input terminal of comparator $A_{4B}$. The outputs of the comparators $A_{4A}$ and $A_{4B}$ are coupled to the clear and the set terinals of the flip-flop $F_1$ respectively.

In operation, the 8 bit multiplying digital-to-analog convertor (MDAC) multiplies a reference voltage $V_{LINE}$ (that is proportional to the instantaneous input voltage) by the quantized current gain value $c_n$ supplied from the proportional-integral (PI) controller in the voltage regulation loop to provide an upper (or "turn-off") control voltage $V_{cont1}$. The resistive voltage division provided by R5 and R6 supplies a lower (or "turn-on") control voltage $V_{cont2}$. The current flowing through the inductor $L_1$ is measured using a small, (on the order of 0.1 Ohm) resistor $R_{11}$.

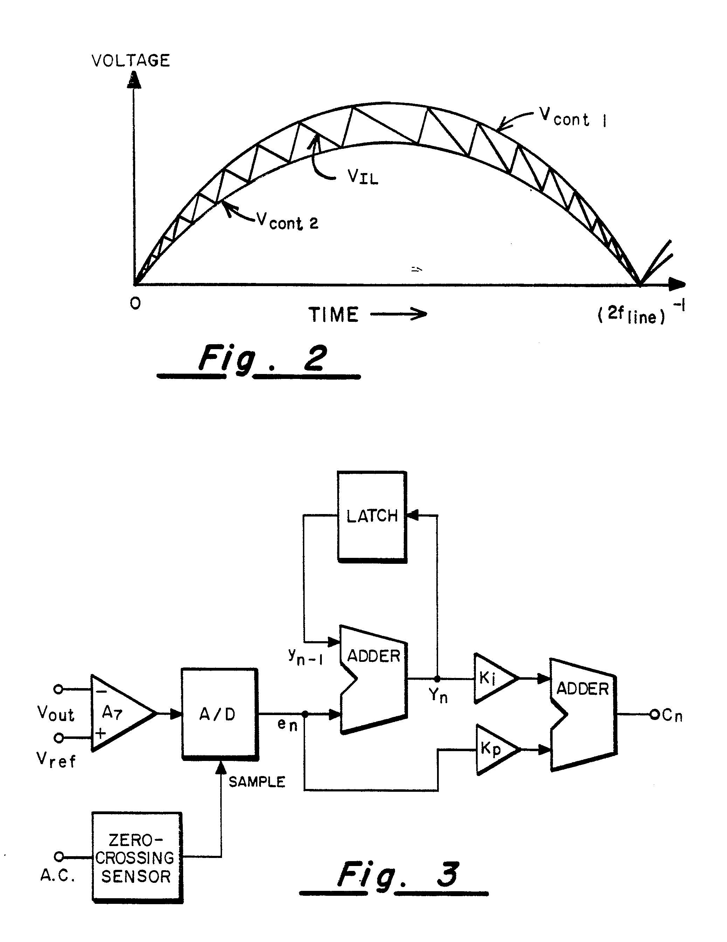

The amplifier $A_5$ provides a voltage $V_{IL}$, which is proportional to the instantaneous inductor current through $L_1$ to the inverting input terminal of the turn-on comparator $A_{4B}$ and to the non-inverting input terminal of the turn-off comparator $A_{4A}$. An S-R flip-flop $F_1$ is toggled by the comparators through an amplifier $A_6$ to turn the field-effect transistor switch $Q_1$, which acts as the output stage of the step-up converter, ON and OFF. The time relationships between $V_{IL}$, $V_{cont1}$, and $V_{cont2}$ for one-half cycle of the input A.C. line is shown in Fig. 2. The differences between the voltage $V_{IL}$ and $V_{cont1}$ controls the state of the flip-flop $F_1$, which controls the field-effect transistor Q1.

Transfer functions describing the gain of the current program loop and the current hysteresis coefficient in terms of the quantized current gain value $c_n$ and the input voltage $V_{in}$ are useful for further analysis. The instantaneous voltages driving comparators $A_{4B}$ and $A_{4A}$ are related to the input voltage and inductor current through

$$\frac{V_{cont1}(t)}{V_{in}(t)} = \frac{R_2 R_4}{(R_1+R_2)R_3} \frac{c_n}{2^m} \tag{6}$$

$$\frac{V_{cont2}(t)}{V_{cont1}(t)} = \frac{R_6}{R_5 + R_6} \tag{7}$$

$$\frac{V_{IL}(t)}{I_{L1}(t)} = \frac{R_{11} R_8}{R_7} \tag{8}$$

where m is the number of bits used to represent the quantized current gain value $c_n$ and (t) indicates an instantaneous value. During steady-state operation, the average value of the upper and lower control voltages will be equal to the voltage representing the inductor current

$$\frac{V_{cont1} - V_{cont2}}{2} = V_{IL} \tag{9}$$

The gain of the current program loop may be expressed as a function of the quantized current gain value

$$\frac{I_L(t)}{V_{in}(t)} = \frac{R_2 R_4 R_7 (R_5 + R_6)}{(R_1+R_2)R_3(R_5+R_6)R_8 R_{11}} \frac{c_n}{2^m} \tag{10}$$

The difference between the upper and lower control voltages, when multiplied by the voltage-to-current gain of Equation 8, determines the inductor ripple current

$$K_{hy} = \frac{I_{rip}(t)}{V_{in}(t)} = \frac{R_2 R_4 R_5 R_7}{(R_1+R_2)R_3(R_5+R_6)R_{11} R_8} \frac{c_n}{2^m} \tag{11}$$

The selection of the value of the capacitor $C_2$ is a critical aspect of the design of the unity power factor power conditioner. The capacitor conducts the ripple current directly to the shunt resistor, bypassing the A.C. line. If the capacitor is large and if there is no delay between the instant that the inductor current reaches a threshold and the instant that the power transistor $Q_1$ actually switches states, the current program loop will be unconditionally stable. However, if the value of the capacitor $C_2$ is too large, unacceptable harmonic distortion will be produced in the A.C. line current.

A digital proportional-integral (PI) control may be implemented as shown in Fig. 3, and used for output voltage regulation and current gain control in accordance with the present invention. A digital error circuit consisting of an uncompensated analog amplifier $A_7$ and an analog-to-digital (A/D) converter, samples and digitizes the error in the output voltage at the sensing of each zero-crossing of the A.C. line with a conventional zero-crossing circuit to produce a digital error signal $e_n$. Sampling at the zero-crossing is advantageous since the average output voltage (to a close approximation) is measured, regardless of the magnitude of the ripple component. Furthermore, sampling at the zero-crossings insures that no information will be obtained at the ripple frequency. This prevents the voltage regulation loop from distorting the A.C. line current waveform in an attempt to reduce the output voltage ripple.

The digital output signal from the digital PI controller adjusts, in discrete steps, the gain of the current program loop, and is therefore termed the quantized current gain value. The quantized current gain value is restricted to the $2^m$ integer values which may be represented by an m-bit digital word. As an example, if an 8 bit binary representation is used the digital PI controller, the decimal representation of the quantized current gain value $c_n$ may range from 0 to 255. Since a hardware realization is used, the calculation updating the quantized current gain value is completed during the zero-crossings of the A.C. line.

The digital error signal $e_n$ describes the difference between the actual output voltage of the power conditioner at the nth zero-crossing of the A.C. line and a reference voltage $V_{ref}$. As an example, if an 8 bit two's complement representation is used in the digital PI controller, the decimal representation of $e_n$ may range from -128 to +127.

The quantized current gain value $c_n$ is calculated from the weighted summation of two digital signals. The first digital signal is proportional to the digital error input $e_n$. The second digital signal $y_n$ is obtained from the discrete integration of the digital error input $e_n$. Discrete integration is accomplished using an adder and a register to maintain a continuous summation of the digital error input.

$$y_n = e_0 + e_1 + \ldots + e_n \quad (12)$$

A discrete time difference equation may be written

$$y_n = y_{n-1} + e_n \quad (13)$$

where $y_{n-1}$ is the stored digital value in the latch which was obtained from the sample prior to the one which yielded the $y_n$ signal. Weighting coefficients $K_p$ and $K_i$ are provided to adjust the contribution of the proportional and integral signals to the current gain value calculation, respectively,

$$c_n = K_i y_n + K_p e_n \quad (14)$$

Overflow detection and correction may be implemented in a conventional manner at the outputs of both adders to prevent erroneous operation.

In general, $K_p$ and $K_i$ can take on any value. In the preferred system however, $K_p$ is restricted to unity and $K_i$ may take on the values: 2, 1, 1/2, 1/4. This is because digital multiplication or division by powers of two is simply implemented, and because the gain of the digital error amplifier may be used to adjust the overall loop gain.

A PID controller which may be utilized to implement the PI control of the present invention is shown in United States Patent application, Serial No. 773,684, Power Converter with Duty Ratio Quantization, Filed September 9, 1985, which is hereby incorporated by reference into this document.

In order to maintain a unity power factor, the closed-loop frequency response of the output voltage regulation loop must cross through unity gain at a frequency which is less than the frequency of the ripple in the output voltage. If this condition is not met, the output voltage regulation loop will distort the input current waveform in an effort to reduce the output ripple voltage. The digitally controlled power converter of the present invention may alternately accept a quantized current gain value from an external source, allowing open-loop operation.

A high performance A.C. to D.C. power conditioner is disclosed which uses digital proportional-integral control for output voltage regulation and variable hysteresis control for current programming. A digitally controlled analog converter (i.e., a multiplying digital-to-anlaog controlled - MDAC) is used as the interface between the voltage regulation loop and the current program loop.

The sampling instant of the digital PI controller is determined by the zero-crossings of the A.C. line. This scales the frequency characteristics of the closed-loop system with changes in the A.C. line frequency. Power conditioners for different A.C. line frequencies may be implemented with the power conditioner of the present invention since only the output capacitor must be changed to take advantage of the improved dynamic characteristics offered by a higher line frequency. On-the-other-hand, if a single power conditioner is required to operate over a wide range of A.C. line frequencies, modifications are required to insure that proper operation is retained. This may be accomplished by including circuitry to automatically alter the proportional and integral weighting coefficients as different line frequencies are encountered.

Another approach is to mask some of the zero-crossings when operating at higher line frequencies to maintain a nearly constant sampling rate. Providing an internal clock to determine the sampling instances if zero-crossings are not detected would allow the power conditioner to operate from D.C. as well as A.C. power sources. Care must be taken, however, since the loop gain varies with both magnitude and shape of the input voltage waveform.

The digital control technique of the present invention is also well suited for three-phase applications since precise current balancing is easily obtained. A single PI controller and three step-up converters (with isolated D.C. to D.C. output stages) are required for a three-phase system. The digital quantized current gain control signal may be delivered to each step-up converter, without any loss of accuracy, using, for example, digital optical couplers.

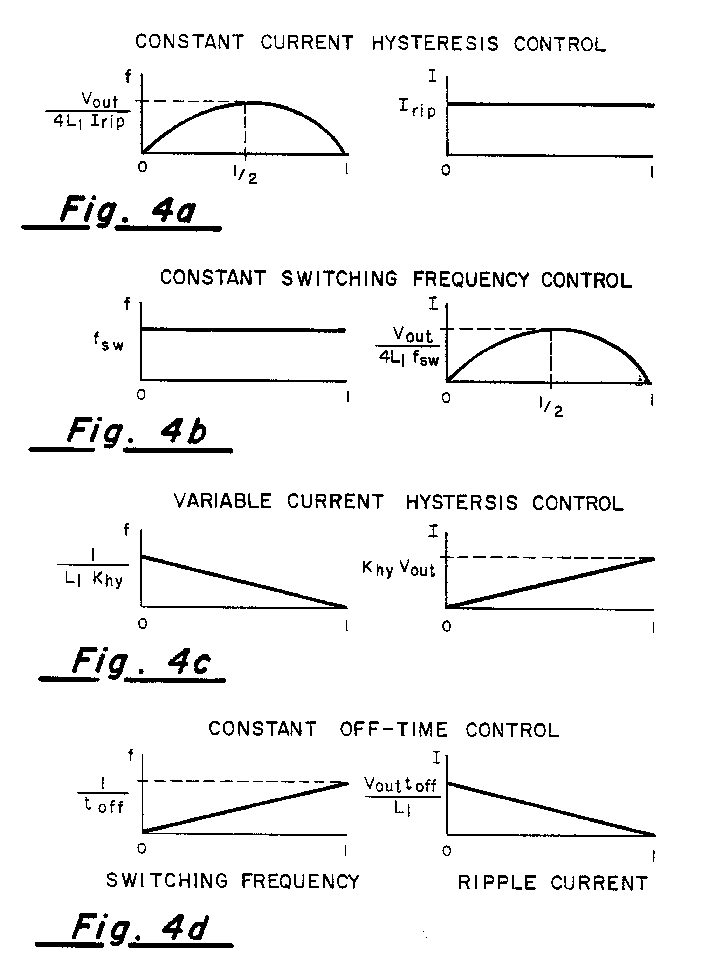

Various control functions may be implemented via the PI controller to develop switching control waveforms for the current program loop. For example, these control laws may include: constant switching frequency control, constant current hysteresis control, constant off-time control, and variable current hysteresis control. Switching frequency and inductor ripple current are plotted against the normalized input voltage for each of the control functions in Fig. 4 and derivations are given below using the symbols defined in Fig. 1. (It is assumed that the step-up converter is ideal and operating in steady-state in these derivations.)

Constant Frequency Control. Since the switching frequency is constant, the sum of the on-time and the off-time of the switch must also be constant

$$t_{on} + t_{off} = 1/f_{sw} = \text{constant} \quad (15)$$

Assuming that the input and output voltages are constant over the duration of the switching cycle and using

$$V = L_1 \frac{di}{dt} \quad (16)$$

the on-time and off-time may be expressed as

$$t_{on} = \frac{L_1 i_{rip}}{V_{in}} \quad (17)$$

$$t_{off} = \frac{L_1 I_{rip}}{V_{out} - V_{in}} \quad (18)$$

By substituting Equations 17 and 18 into Equation 15, an expression for the ripple current is obtained.

$$I_{rip} = \frac{V_{in}(V_{out} - V_{in})}{f_{sw} L_1 V_{out}} \quad (19)$$

It is noted that the ripple current goes to zero when the input voltage is equal to zero and also when the input voltage is equal to the output voltage. The maximum ripple current may be found by setting the derivative of Equation 19, with respect to the input voltage, equal to zero.

$$\frac{dI_{rip}}{dV_{in}} = 0 \qquad when \qquad I_{rip} = I_{rip,max} \qquad (20)$$

$$I_{rip,max} = \frac{V_{out}}{4f_{sw}L_1} \qquad when \qquad V_{in} = \frac{V_{out}}{2} \qquad (21)$$

Constant Hysteresis Control. By definition, the ripple current will be constant. Using Equations 17 and 18, Equation 15 may be solved for the switching frequency

$$t_{on} + t_{off} = \frac{1}{f_{sw}} = \frac{L_1 I_{rip}}{V_{in}} + \frac{L_1 I_{rip}}{V_{out} - V_{in}} \qquad (22)$$

$$f_{sw} = \frac{V_{in}(V_{out} - V_{in})}{I_{rip}L_1V_{out}} \qquad (23)$$

The switching frequency goes to zero as the input voltage goes to zero and when the input voltage is equal to the output voltage. The maximum switching frequency may be found by setting the derivative of Equation 23, with respect to the input voltage, equal to zero.

$$f_{sw,max} = \frac{V_{out}}{4L_1 I_{rip}} \qquad when \qquad V_{in} = \frac{V_{out}}{2} \qquad (24)$$

Constant Off-Time Control. Since the off-time is constant, the on-time may be expressed as

$t_{on} = T_{sw} - t_{off}$ (25)

where $T_{sw} = 1/f_{sw}$.

During steady-state operation, the static voltage transfer function for the step-up converter is

$$\frac{V_{out}}{V_{in}} = \frac{1}{1 - D} \qquad (26)$$

where D is the duty ratio of the power switching transistor. Since the duty ratio is defined as the on-time divided by the switching period $T_{sw}$, Equation 26 may be rewritten as

$$\frac{V_{in}}{V_{out}} = 1 - \frac{t_{on}}{T_{sw}} \tag{27}$$

By combining Equations 25 and 27, the switching frequency may be solved for

$$f_{sw} = \frac{V_{in}}{V_{out}} \frac{1}{t_{off}} \tag{28}$$

The ripple current is found directly from Equation 18

$$I_{rip} = \frac{t_{off}}{L_1} (V_{out} - V_{in}) \tag{29}$$

Variable Hysteresis Control. Expressions for the switching frequency and ripple current as a function of the input and output voltages are given in Equations 1 and 4. However, it is interesting to note that Equations 1 and 2 may be combined to show

$t_{on} = K_{hy}L_1 = \text{constant}$ (30)

Therefore, variable hysteresis control may also be described as constant on-time control.

## Claims

1. In a power conditioner for providing a D.C. output voltage from a rectified A.C. input voltage source which comprises voltage output means and an inductor with a high permeability core, through which ripple current flows, which is coupled between said input voltage source and said voltage output means, the improvement comprising current control means for varying the magnitude of the peak-to-peak value of said ripple current in direct proportion to the magnitude of said instantaneous rectified input voltage such that the power conditioner draws a substantially sinusoidal input current.

2. In a power conditioner as claimed in claim 1, the improvement wherein said voltage output means comprises switching means.

3. In a power conditioner as claimed in claim 2 wherein said power conditioner supplies an output voltage and said current control means comprises a reference voltage, the improvement comprising comparison means for comparing said output voltage and said reference voltage, and for suppling an analog error signal representative of the difference of said output voltage and said reference voltage, and analog-to-digital converter means coupled to said comparison means to receive said analog error signal and to said switching means for controlling the switching frequency of said switching means.

4. In a power conditioner as claimed in claim 3, the further improvement wherein said analog-to-digital converter means comprises a sampling converter means and said power conditioner comprises sample control means coupled to receive the A.C. input signal for supplying a sampling signal upon each zero crossing of the A.C. input signal.

5. In a power conditioner as claimed in claims 3 or 4, the further improvement wherein said comparison means comprises a proportional integral controller which receives said analog error signal and produces a digital error signal.

6. In a power conditioner as claimed in claim 5 the further improvement wherein said switching means comprises a switch connected in shunt with said inductor and that has a control terminal and said power conditioner further comprises regulating means coupled to said comparison means and to receive said instantaneous rectified input voltage and said digital error signal which comprises amplifier means for providing a turn-on output signal and a turn-off output signal, both of which have substantially the waveform as said rectified input signal, but which are of different amplitudes, measuring means coupled to said inductor and said amplifier means for providing an inductor signal representative of the instantaneous current flowing in said inductor, and on-off means coupled to said amplifier means and to said switching means for controlling the switching of said switching means in response to said inductor signal and said turn-on and turn-off signals.

7. In a power conditioner as claimed in any of the preceding claims the improvement wherein said output means comprises output filter means.

*Fig. 1*

VOLTAGE

$V_{cont\ 1}$

$V_{IL}$

$V_{cont\ 2}$

O

TIME ⟶

$(2f_{line})^{-1}$

## _Fig. 2_

LATCH

ADDER

$y_{n-1}$

$Y_n$

$K_i$

ADDER

$K_p$

$C_n$

$V_{out}$

$A_7$

A/D

$e_n$

$V_{ref}$

SAMPLE

ZERO-CROSSING SENSOR

A.C.

## _Fig. 3_

CONSTANT CURRENT HYSTERESIS CONTROL

$\dfrac{V_{out}}{4L_1 \, I_{rip}}$

$I_{rip}$

## _Fig. 4a_

CONSTANT SWITCHING FREQUENCY CONTROL

$f_{sw}$

$\dfrac{V_{out}}{4L_1 \, f_{sw}}$

## _Fig. 4b_

VARIABLE CURRENT HYSTERSIS CONTROL

$\dfrac{1}{L_1 \, K_{hy}}$

$K_{hy} \, V_{out}$

## _Fig. 4c_

CONSTANT OFF-TIME CONTROL

$\dfrac{1}{t_{off}}$

$\dfrac{V_{out} \, t_{off}}{L_1}$

SWITCHING FREQUENCY          RIPPLE CURRENT

## _Fig. 4d_